(19) Europäisches Patentamt
European Patent Office
Office européen des brevets

(11) **EP 4 266 160 A1**

(12) **EUROPEAN PATENT APPLICATION**
published in accordance with Art. 153(4) EPC

(43) Date of publication:
**25.10.2023 Bulletin 2023/43**

(51) International Patent Classification (IPC):
**G06F 3/041** (2006.01)    **G06N 20/20** (2019.01)
**G06N 7/00** (2023.01)

(21) Application number: **21921451.7**

(22) Date of filing: **23.11.2021**

(86) International application number:
**PCT/KR2021/017280**

(87) International publication number:
**WO 2022/158692 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2021  KR 20210008918**

(71) Applicant: **Samsung Electronics Co., Ltd.
Suwon-si, Gyeonggi-do 16677 (KR)**

(72) Inventors:
• **BYUN, Dongnam**
**Suwon-si, Gyeonggi-do 16677 (KR)**
• **KIM, Dongchan**
**Suwon-si, Gyeonggi-do 16677 (KR)**
• **HWANG, Jinyoung**
**Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **ELECTRONIC DEVICE FOR IDENTIFYING FORCE TOUCH AND METHOD FOR OPERATING SAME**

(57)    A method of identifying, in an electronic device, a force touch with respect to a touch input of a user includes receiving at least one sample input from the user, obtaining feature information for the at least one sample input, obtaining a plurality of force touch models for identifying the force touch, obtaining feature information for at least one touch input included in training data used to train the plurality of force touch models, determining a force touch model for identifying the force touch among the plurality of force touch models, based on a similarity between the feature information obtained with respect to the plurality of force touch models and the feature information for the sample input, and identifying, based on the determined force touch model, a force touch for the touch input of the user.

FIG. 1

## Description

Technical Field

The present disclosure relates to an electronic device for identifying a force touch and an operating method thereof.

Background Art

A force touch, as one of methods of performing a touch input, refers to a technique of performing an operation by recognizing the strength of a force applied to a touch screen. According to the force touch, different operations may be performed according to the strength of the force of a touch input.

In order for an operation according to a force touch to be performed in accordance with the user's intention, it is necessary to determine the characteristics of the user's touch input in accordance with the user's intention.

Thus, a method of suitably identifying a force touch in accordance with the user's intention is proposed.

Disclosure

Technical Problem

In order to solve the above problems, the present disclosure provides an electronic device for identifying a force touch and an operating method thereof.

Also, the present disclosure provides a computer-readable recording medium having recorded thereon a program for executing the operating method in a computer. Technical objects to be achieved by the present disclosure are not limited to the above technical objects and there may be other technical objects.

Technical Solution

As a technical means for achieving the above technical objects, according to an aspect of the present disclosure, a method of identifying, in an electronic device, a force touch with respect to a touch input of a user includes receiving at least one sample input from the user, obtaining feature information for the at least one sample input, obtaining a plurality of force touch models for identifying the force touch, obtaining feature information for at least one touch input included in training data used to train the plurality of force touch models, determining a force touch model for identifying the force touch among the plurality of force touch models, based on a similarity between the feature information obtained with respect to the plurality of force touch models and the feature information for the sample input, and identifying, based on the determined force touch model, a force touch for the touch input of the user.

Also, according to another aspect of the present disclosure, an electronic device for identifying a force touch with respect to a touch input of a user includes a user input unit configured to receive at least one sample input from the user, a memory storing one or more instructions, and at least one processor configured to execute the one or more instructions stored in the memory, wherein the at least one processor is configured to obtain feature information for the at least one sample input, obtain a plurality of force touch models for identifying the force touch, obtain feature information for at least one touch input included in training data used to train the plurality of force touch models, determine a force touch model for identifying the force touch among the plurality of force touch models, based on a similarity between the feature information obtained with respect to the plurality of force touch models and the feature information for the sample input, and identify, based on the determined force touch model, a force touch for the touch input of the user.

Also, according to another aspect of the present disclosure, a recording medium has stored therein a program for performing the above method.

Also, according to another aspect of the present disclosure, a computer program product includes a computer-readable storage medium having recorded thereon the program to be executed in a computer.

Description of Drawings

FIG. 1 is a diagram illustrating an example of obtaining a model for identifying a force touch, according to an embodiment.

FIG. 2 is a diagram illustrating an example of receiving a sample input, according to an embodiment.

FIG. 3 is a diagram illustrating an example of a force touch model according to an embodiment.

FIG. 4 is a diagram illustrating an example of comparing feature information of a force touch model with feature information of a sample input, according to an embodiment.

FIG. 5 is a diagram illustrating an example of selecting two or more force touch models, according to an embodiment.

FIG. 6 is a diagram illustrating an example of identifying a force touch by using two or more force touch models, according to an embodiment.

FIG. 7 is a diagram illustrating an example of identifying a force touch by using two or more force touch models, according to an embodiment.

FIG. 8 is a block diagram for describing an internal configuration of an electronic device according to an embodiment.

FIG. 9 is a block diagram for describing an internal configuration of an electronic device according to an embodiment.

FIG. 10 is a flowchart illustrating a method of identifying a force touch, according to an embodiment.

FIG. 11 is a diagram illustrating an example of barometric pressure information collected by an electronic device 1000 while a user's touch input is received, according to an embodiment.

FIG. 12 is a diagram illustrating an example of identifying a force touch based on barometric pressure information, according to an embodiment.

FIG. 13 is a diagram illustrating a configuration arrangement of an electronic device according to an embodiment.

FIG. 14 is a cross-sectional view illustrating a configuration arrangement of an electronic device according to an embodiment.

Mode for Invention

Hereinafter, embodiments of the present disclosure will be described in detail with reference to the accompanying drawings so that those of ordinary skill in the art may easily implement the embodiments of the present disclosure. However, the present disclosure may be embodied in many different forms and should not be construed as being limited to the embodiments set forth herein. Also, portions irrelevant to the description of the present disclosure will be omitted in the drawings for a clear description of the present disclosure, and like reference numerals will denote like elements throughout the specification.

Throughout the specification, when an element is referred to as being "connected" to another element, it may be "directly connected" to the other element or may be "electrically connected" to the other element with one or more intervening elements therebetween. Also, when something is referred to as "including" a component, another component may be further included unless specified otherwise.

Functions related to artificial intelligence according to the present disclosure may be operated through a processor and a memory. The processor may include one or more processors. In this case, the one or more processors may include a general-purpose processor such as a central processing unit (CPU), an application processor (AP), or a digital signal processor (DSP), a graphic dedicated processor such as a graphic processing unit (GPU) or a vision processing unit (VPU), or an artificial intelligence dedicated processor such as a neural processing unit (NPU). The one or more processors may control input data to be processed according to a predefined operation rule or artificial intelligence model stored in the memory. Alternatively, when the one or more processors include an artificial intelligence dedicated processor, the artificial intelligence dedicated processor may be designed with a hardware structure specialized for processing a particular artificial intelligence model.

The predefined operation rule or artificial intelligence model may be characterized as being generated through training. Here, being generated through training may mean that a basic artificial intelligence model is trained by a learning algorithm by using a plurality of pieces of training data and accordingly a predefined operation rule or artificial intelligence model set to perform a desired feature (or purpose) is generated. Such training may be performed in a machine itself in which artificial intelligence according to the present disclosure is performed, or may be performed through a separate server and/or system. Examples of the learning algorithm may include, but are not limited to, supervised learning, unsupervised learning, semi-supervised learning, or reinforcement learning.

The artificial intelligence model may include a plurality of neural network layers. Each of the plurality of neural network layers may have a plurality of weight values and may perform a neural network operation through an operation between the plurality of weights and the operation result of a previous layer. The plurality of weights of the plurality of neural network layers may be optimized by the learning results of the artificial intelligence model. For example, the plurality of weights may be updated (refined) such that a loss value or a cost value obtained by the artificial intelligence model during the learning process may be reduced or minimized. The artificial neural network may include Deep Neural Network (DNN) and may include, for example, Convolutional Neural Network (CNN), Deep Neural Network (DNN), Recurrent Neural Network (RNN), Restricted Boltzmann Machine (RBM), Deep Belief Network (DBN), Bidirectional Recurrent deep Neural Network (BRDNN), or Deep Q-Networks but is not limited to the examples described above.

Hereinafter, the present disclosure will be described in detail with reference to the accompanying drawings.

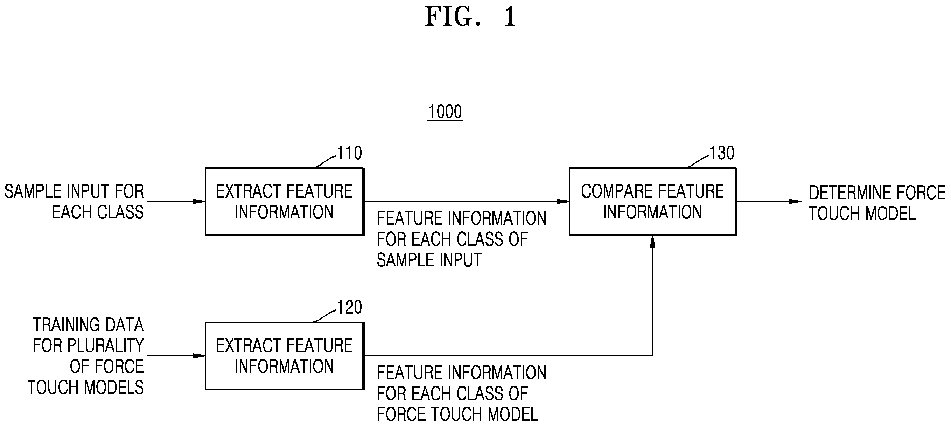

FIG. 1 is a diagram illustrating an example of obtaining a model for identifying a force touch, according to an embodiment.

Referring to FIG. 1, an electronic device 1000 according to an embodiment may obtain a force touch model for identifying a force touch from a touch input received from a user and identify a force touch with respect to a user's touch input based on the force touch model. Also, the electronic device 1000 may perform an operation corresponding to the user's touch input based on a result of identifying the force touch.

The electronic device 1000 according to an embodiment may be a device capable of identifying a force touch in response to a user's touch input and providing a response thereto and may be implemented in various forms. For example, the electronic device 1000 may include a digital camera, a smart phone, a notebook computer (laptop computer), a tablet PC, an e-book terminal, a digital broadcasting terminal, a personal digital assistant (PDA), a portable multimedia player (PMP), a navigation device, an MP3 player, or a vehicle; however, the present disclosure is not limited thereto. The electronic device 1000 according to an embodiment may be a wearable device that may be worn by the user. The wearable device may include at least one of an accessory-type device (e.g., a watch, a ring, a wrist band, an ankle band, a necklace, glasses, or a contact lens), a head-mounted-device (HMD), a cloth or clothing-integrated device (e.g., electronic clothing), a body-attachable device (e.g., a skin pad), or a bio-implantable device (e.g., an implantable circuit); however, the present disclosure is not limited thereto.

According to an embodiment, according to the result of identifying the force touch, an operation corresponding to the identified characteristics (e.g., strength, inclination, touch area, and speed) of the force touch may be performed. For example, in the electronic device 1000, when a line is drawn according to the user's touch input, a force touch may be identified with respect to the touch input, and according to the strength characteristic among the identified characteristics of the force touch, a thicker line may be drawn as the strength of the touch input increases.

The force touch according to an embodiment may be identified as force touches having different characteristics according to the characteristics of the user's touch input. Also, the force touch according to an embodiment may be classified into different classes according to various characteristics such as the strength, speed, and area of the touch input identified with respect to the force touch, and an operation corresponding to each class may be performed. According to an embodiment, in order for the force touch to be classified as a class of an operation desired by the user, when the user performs a touch input having a force touch characteristic corresponding to the class, the electronic device 1000 may perform an operation intended by the user.

For example, when the force touch is classified into class A (strong touch) and class B (medium-strength touch) according to the strength characteristics of the force touch, the user's touch input may be identified as a force touch belonging to one of class A and class B. However, the present disclosure is not limited thereto, and the force touch may be classified into two or more classes and may be classified according to various characteristics (e.g., speed and touch area) without being limited to strength.

According to an embodiment, the characteristics of the force touch corresponding to the user's desired operation may vary according to the characteristics of the user's touch input. For example, a touch input of a woman or a young child that is relatively weak may have a small strength value measured, unlike a touch input of a man that is relatively strong. However, even when the measured strength value of the touch input is great or small, the force touch may be identified such that an operation according to the user's intention may be performed. Thus, according to an embodiment, even with respect to touch inputs with different strengths, according to the characteristics of the user, the force touch may be classified as the same class and the same operation may be performed.

By considering the characteristics of the user's touch input, the electronic device 1000 according to an embodiment may use at least one pre-trained force touch model to perform an operation desired by the user according to the touch input received from the user. At least one force touch model according to an embodiment may be an artificial intelligence model pre-trained based on training data collected from various users having various touch input characteristics. According to the force touch model according to an embodiment, a corresponding class may be determined to be suitable for the characteristics of the user's touch input with respect to the characteristics of each force touch such that an operation desired by the user may be performed.

According to an embodiment, training data pre-collected with respect to the touch inputs of users having various characteristics (e.g., age, sex, race, weight, dominant hand, and dominant finger) may be classified according to the characteristics thereof. According to an embodiment, the training data may be classified according to the user's characteristics related to the touch input. Also, based on the training data, among a plurality of force touch models, a force touch model corresponding to the user's characteristics of the training data may be trained.

The training data according to an embodiment may include information about the characteristics (e.g., strength, inclination, touch area, and speed) of the touch input as input information for the force touch model, and information about the class of the force touch as answer information for the input information.

The force touch model according to an embodiment may be pre-trained based on the training data such that answer information may be output with respect to the input information. According to an embodiment, different force touch models respectively corresponding to the characteristics of different touch inputs of the user may be separately trained. Thus, even respect to the touch input having the same characteristics, different force touch classes may be determined according to the characteristics of the user's touch input.

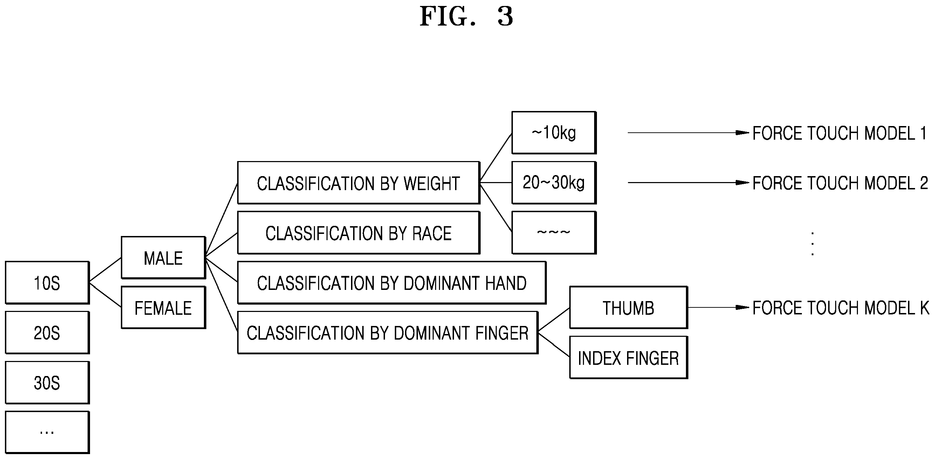

The force touch model according to an embodiment may be trained based on the training data classified according to various criteria related to the characteristics of users, as in an example illustrated in FIG. 3. According to an embodiment, a plurality of force touch models corresponding to the characteristics of different users may be trained based on the training data classified as in the example illustrated in FIG. 3.

The training data used to train the force touch model according to an embodiment may include information about the characteristics (e.g., strength, inclination, touch area, and speed) of the touch input collected with respect to the inputs of various users and information about the class of the force touch as answer information for the input having the characteristics of the touch input. Thus, the force touch model may be trained such that the class included in the answer information may be determined as output information with respect to the touch input having the characteristics of the touch input of the training data.

The class that may be determined by the force touch model according to an embodiment may refer to a group into which the user's touch input is classified according to the characteristics of the touch input. According to an embodiment, an operation corresponding to the class determined with respect to the user's touch input may be performed.

The force touch model according to an embodiment may be continuously updated as training data is continuously collected from various users. However, the present disclosure is not limited thereto, and the force touch model may be a model pre-trained according to various methods at various times.

The electronic device 1000 according to an embodiment may obtain a force touch model matching (corresponding to) the characteristics of the user's touch input among pre-trained force touch models and perform an operation by identifying the force touch with respect to the user's input based on the obtained force touch model. Thus, the electronic device 1000 according to an embodiment may obtain a force touch model corresponding to the characteristics of the user's touch input such that the force touch may be identified in accordance with the characteristics of the user's touch input. Also, the electronic device 1000 may receive at least one sample input from the user and obtain a force touch model corresponding to the characteristics of the user's touch input based on the sample input. The sample input according to an embodiment may be received from the user for each class of the force touch. For example, the electronic device 1000 may request and receive at least one sample input for each class from the user. The sample input according to an embodiment may be an example of the user's touch input for obtaining a force touch model corresponding to the characteristics of the user's touch input.

According to an embodiment, the electronic device 1000 may request the user's touch input for determining the characteristics of the force touch of class A and obtain the received user's touch input as a sample input of class A. For example, with respect to class A, a touch input having a strength according to the user's intention may be input as a sample input for class A such that a force touch having a strength desired by the user may be classified as class A.

In 110, the electronic device 1000 according to an embodiment may obtain feature information about a sample input corresponding to each class based on at least one sample input with respect to each class. The feature information according to an embodiment may include a feature vector including a value with respect to each dimension with various characteristics (e.g., strength, speed, and size of touch area) of the touch input as dimensions. However, the present disclosure is not limited thereto, and the feature information may include information about the characteristics of the touch input represented in various ways.

The electronic device 1000 according to an embodiment may use a pre-trained feature extraction model to obtain feature information from information about the sample input. The electronic device 1000 according to an embodiment may obtain feature information about at least one sample input from the user with respect to each class by using the feature extraction model. Unlike the force touch model trained in response to the characteristics of different touch inputs, the feature extraction model according to an embodiment may be pre-trained based on information about the touch input of various characteristics such that various characteristics of the touch input may be recognized.

However, the present disclosure is not limited thereto, and the electronic device 1000 may obtain feature information about at least one sample input obtained with respect to each class by using various methods (e.g., a lookup table and a function).

The feature information of the sample input according to an embodiment may be obtained based on not only information about the input characteristics of the sample input itself (e.g., strength, speed, touch area, and the like) but also information obtained by the electronic device 1000 (e.g., information sensed by various sensors) when the sample input is received. For example, the feature information of the sample input may be obtained when not only information about the input characteristics of the sample input itself but also information obtained by the electronic device 1000 (e.g., barometric pressure information obtained by a barometric pressure sensor) when the sample input is received is input together as input information into the feature extraction mode. However, the present disclosure is not limited thereto, and the feature information of the sample input may be obtained based on various information related to the sample input.

The electronic device 1000 according to an embodiment may obtain feature information about each class from feature information of at least one sample input. The feature information about each class according to an embodiment may be obtained based on a representative value (e.g., an average value, a median value, or a mode value) of the feature information of at least one sample input. For example, when the feature information of at least one sample input obtained with respect to class A includes at least one feature vector, an average value of the at least one feature vector may be obtained as feature information of class A. However, the present disclosure is not limited thereto, and the feature information of each class may be obtained from the feature information of the sample input according to various methods.

The electronic device 1000 according to an embodiment may obtain at least one force touch model to be used to identify a force touch among a plurality of pre-trained force touch models based on the feature information obtained with respect to each class. The electronic device 1000 according to an embodiment may obtain feature information about each class with respect to each of a plurality of force touch models and obtain at least one force touch model based on the obtained feature information.

In 120, feature information of the force touch model according to an embodiment may be obtained for each class based on the touch input information included in the training data used to train the force touch model. For example, like the feature information of the sample input, the feature information of the force touch model may be obtained by inputting information about the touch input included in the training data into the feature extraction model.

The feature information of the force touch model according to an embodiment may be obtained for each class like the feature information of the sample input. The feature information about each class according to an embodiment may be obtained based on a representative value (e.g., an average value, a median value, or a mode value) of the feature information obtained with respect to a touch input of at least one piece of training data. For example, when the feature information about a touch input of at least one piece of training data corresponding to class A includes at least one feature vector, an average value of the at least one feature vector may be obtained as feature information of class A. However, the present disclosure is not limited thereto, and the feature information of each class may be obtained from the feature information about the touch input of the training data according to various methods.

According to an embodiment, the force touch model may be trained based on not only information about the input characteristics of the touch input itself (e.g., strength, speed, and size of touch area) but also various information (e.g., barometric pressure information and sensor information) collected when the touch input is performed. The feature extraction model according to an embodiment may be a model pre-trained such that feature information of the force touch model may be obtained when not only information about the input characteristics of the touch input itself but also various information collected when the touch input is performed is input as input information.

However, the present disclosure is not limited thereto, and the feature information of the force touch model may be obtained as various types of information representing characteristics related to the touch input used to train the force touch model, according to various methods.

In 130, the electronic device 1000 according to an embodiment may compare the feature information of each class obtained with respect to a plurality of force touch models with the feature information of each class obtained from the sample input and determine the similarity between the two pieces of feature information. According to an embodiment, as the similarity increases, the model may be determined to be suitable for identifying the force touch with respect to the user's touch input. The similarity according to an embodiment may represent the similarity between the two pieces of feature information. For example, the similarity between the two pieces of feature information may be determined according to the distance between two points (e.g., feature vectors) respectively represented by the two pieces of feature information. As the distance between the two points increases, the similarity may be determined as a lower value, and as the distance between the two points decreases, the similarity may be determined as a higher value.

The electronic device 1000 according to an embodiment may obtain at least one force touch model suitable for identifying the force touch in accordance with the characteristics of the user's touch input among a plurality of force touch models according to the similarity. For example, at least one force touch model determined in descending order of similarity may be used to identify the force touch with respect to the user's touch input.

The electronic device 1000 according to an embodiment may determine two or more force touch models as models for force touch identification based on the similarity value. For example, not only a force touch model having the highest similarity value but also a force touch model having a similarity value different from the highest similarity value by a reference value or less may be additionally determined as a model for force touch identification. According to an embodiment, based on the similarity value, when it is not substantially different from the highest-priority similarity value (e.g., when the difference is less than or equal to the reference value), a model that is not the highest-priority force touch model may be used to identify the force touch for the user's touch input.

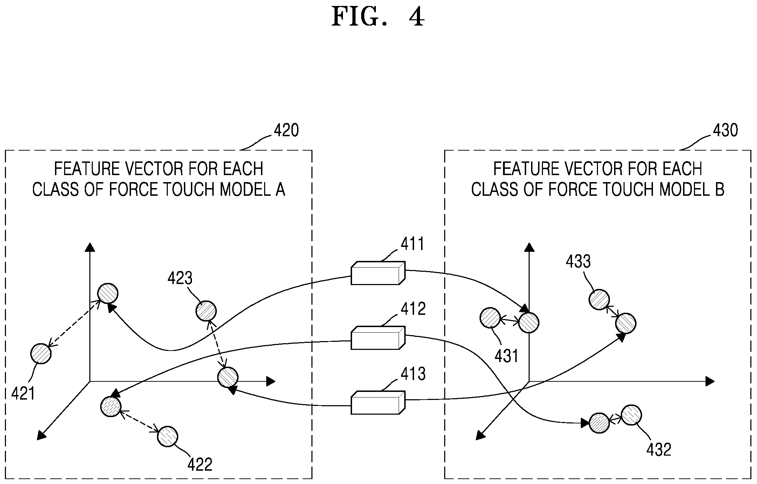

Thus, according to an embodiment, the electronic device 1000 may perform a force touch identification operation more suitable for the characteristics of the user's touch input by using two or more force touch models trained based on the training data having characteristics similar to the characteristics of the user's touch input. In an embodiment, a method of identifying a force touch by using two or more force touch models will be described below in more detail with reference to FIGS. 4 to 6.

The electronic device 1000 according to an embodiment may use the finally-obtained force touch model to identify the force touch with respect to the subsequently-input user's touch input. For example, by inputting information about the currently-input user's touch input into the force touch model, the electronic device 1000 may determine the class of the force touch to which the user's touch input belongs and perform an operate corresponding to the determined class.

Also, when the force touch model according to an embodiment is a model trained based on not only information about the user's touch input but also sensor information (e.g., barometric pressure information) sensed while the user's touch input is performed, a force touch for the user's touch input may be identified based on the above sensor information as well as the information about the user's touch input. For example, the sensor information and the information about the touch input may be concatenated and input into the force touch model or the sensor information and the information about the touch input may be alternately arranged and input into the force touch model such that the identification results of the force touch may be output.

However, the present disclosure is not limited thereto, and the force touch model may be trained further based on various types of information related to the user's touch input, and a force touch for the user's touch input may be identified based on various types of information used for training.

Some of operations of identifying a force touch by the electronic device 1000 according to an embodiment may be performed instead by an external server (not illustrated).

According to an embodiment, a plurality of force touch models may be managed and stored in a server. The server according to an embodiment may be more suitable for storing or continuously updating a plurality of force touch models than the electronic device 1000 because it has better performance and greater capacity for storing data than the electronic device 1000.

According to an embodiment, according to the request of the electronic device 1000, the server may transmit the result of identifying a force touch to the electronic device 1000 based on at least one force touch model among the plurality of force touch models. For example, as information about at least one sample input received from the electronic device 1000 (or feature information about the sample input) is transmitted to the server, a force touch model for identifying the user's force touch may be determined by the server.

The electronic device 1000 according to an embodiment may receive a sample input with respect to each class and transmit information about the sample input for each class to the server. For example, the electronic device 1000 may transmit information about the sample input received with respect to class A and information about the sample input received with respect to class B to the server.

The information about the sample input transmitted by the electronic device 1000 according to an embodiment may include information related to the sample input received for each class, which is necessary for the server to determine the force touch model. For example, the information about the sample input may include various types of information representing the characteristics (e.g., strength, inclination, touch area, speed, and the like) of the sample input. Also, the information about the sample input may include an image including a pixel value representing the strength of the sample input for each area of a touch screen where the sample input is received.

According to an embodiment, the server may obtain feature information of the sample input based on information received from the electronic device 1000 (e.g., information representing the characteristics of the sample input and an image) and determine a force touch model based on the feature information of the sample input. However, the present disclosure is not limited thereto, and various information related to the sample input received from the electronic device 1000 may be transmitted to the server.

Also, as information about the user's touch input received from the electronic device 1000 is transmitted to the server, the result of identifying the force touch with respect to the user's touch input based on the determined force touch model may be transmitted to the electronic device 1000. By receiving the information about the touch input from the electronic device 1000, the server according to an embodiment may obtain a predetermined force touch model with respect to the electronic device 1000 and identify a force touch for the touch input based on the obtained force touch model.

According to an embodiment, as a result of identifying the force touch with respect to the touch input, the server may transmit information about a class to which the touch input belongs or information about an operation to be executed in response to the touch input to the electronic device 1000.

For example, when the electronic device 1000 receives information about a class to which the touch input belongs from the server, the electronic device 1000 may determine a class to which the touch input belongs and an operation corresponding thereto and execute the determined operation.

As another example, the electronic device 1000 may receive, from the server, information about a class to which the touch input belongs and an operation corresponding thereto. When an operation corresponding to the class to which the touch input belongs is determined based on the result of identifying the force touch by the server and the electronic device 1000 receives information about the determined operation from the server, the electronic device 1000 may execute an operation corresponding to the touch input according to the received information.

In this case, the server may first receive, from the electronic device 1000, information necessary to determine the above operation (e.g., an application being executed in the electronic device 1000, the type of operation executable in the electronic device 1000, or the like) and determine, based on the received information, a class to which the touch input belongs and an operation corresponding thereto. For example, when the electronic device 1000 requests force touch identification for a touch input from the server, the electronic device 1000 may transmit, to the server, information necessary to determine a class to which the touch input belongs and an operation corresponding thereto together with information about the touch input.

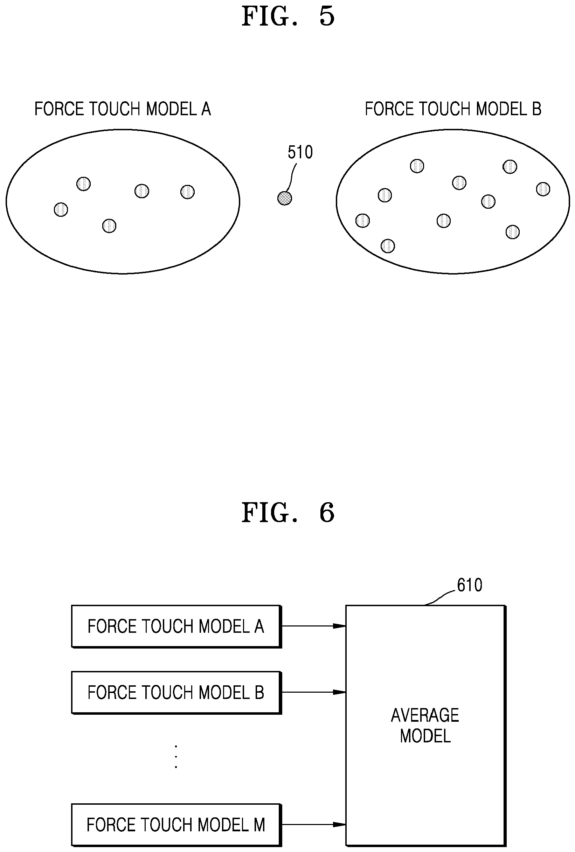

As another example, when a force touch model for identifying the user's force touch is determined by the server, the determined force touch model may be transmitted from the server to the electronic device 1000. The electronic device 1000 according to an embodiment may identify, based on the force touch model, a force touch for the user's touch input subsequently received by the electronic device 1000. The force touch model transmitted from the server to the electronic device 1000 according to an embodiment may include a model newly generated based on at least one force touch model (e.g., an average model of FIG. 6). The server according to an embodiment may determine at least one force touch model based on feature information about the user's sample input and generate a new model (e.g., an average model) from the determined at least one force touch model. The server may transmit the newly generated model to the electronic device 1000, and the electronic device 1000 may identify a force touch for the user's touch input based on the model received from the server.

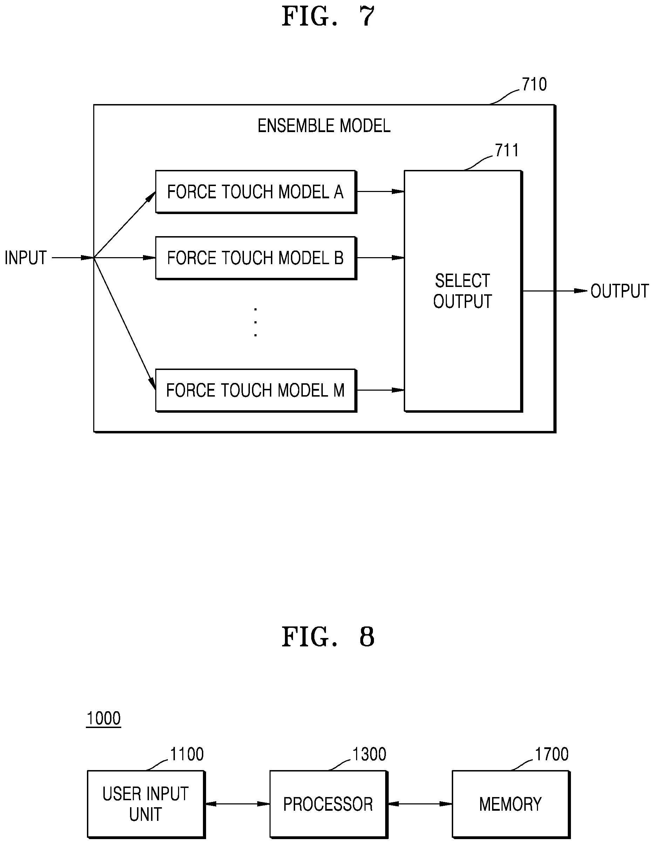

Also, the server according to an embodiment may determine a plurality of force touch models based on feature information of the user's sample input and transmit the plurality of force touch models to the electronic device 1000 instead of generating a new model from the plurality of force touch models. The electronic device 1000 according to an embodiment may obtain a model for identifying a force touch (e.g., an ensemble model of FIG. 7), by using a plurality of force touch models. For example, the electronic device 1000 may obtain an ensemble model illustrated in FIG. 7 by using a plurality of force touch models and identify a force touch for the user's touch input by using the ensemble model.

However, the present disclosure is not limited thereto, and the electronic device 1000 may perform an operation of identifying a force touch for the user's touch input according to various methods, by using the resources of the server.

According to an embodiment, based on the force touch model determined by the user's sample input, a force touch may be identified with respect to the user's touch input subsequently received, and an operation corresponding to the user's touch input may be performed according to the identification result.

For example, the user's force touch input may be classified into two classes of class A (an input received at normal pressure) and class B (an input received at high pressure) by the force touch model, and different operations may be performed depending on the class to which the user's touch input belongs.

For example, in a browser application, a web page may be displayed on a touch screen, and a user's touch input, for example, a touch input of downward drag, may be detected at the lower end of the touch screen. In this case, as a result of identifying the force touch for the user's touch input, when determining that the user's touch input belongs to class B, the electronic device 1000 may perform an operation of quickly scrolling the web page downward according to the user's touch input. On the other hand, as a result of identifying the force touch for the user's touch input, when determining that the user's touch input belongs to class A, the electronic device 1000 may perform an operation of relatively slowly scrolling the web page downward according to the user's touch input.

As another example, the electronic device 1000 may identify a force touch with respect to the user's touch input detected with respect to an application icon on a home screen displayed on the touch screen. As a result of identifying the force touch, when determining that the user's touch input belongs to class B, the electronic device 1000 may perform an operation of displaying detailed information of the application instead of executing the application. On the other hand, as a result of identifying the force touch, when determining that the user's touch input belongs to class A, the electronic device 1000 may perform an operation of executing the application.

However, the present disclosure is not limited thereto, and various types of operations may be performed with respect to the user's touch input according to the result of identifying the force touch.

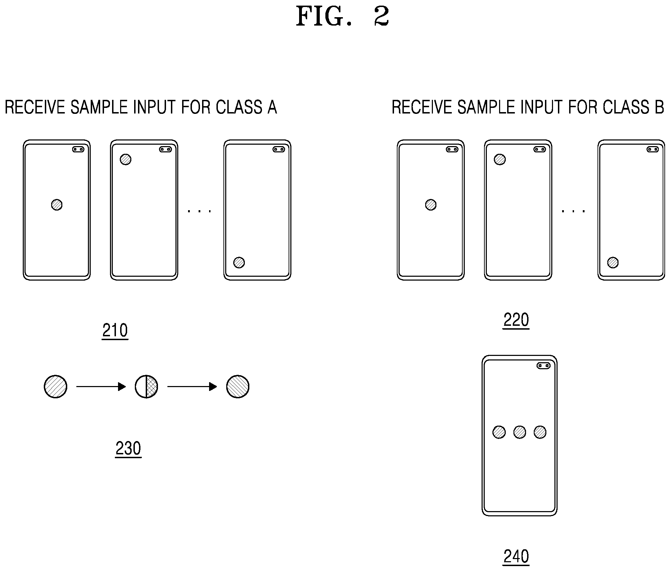

FIG. 2 is a diagram illustrating an example of receiving a sample input, according to an embodiment.

When the force touch input according to an embodiment is classified into two classes of classes A and B and an operation corresponding to each class may be performed, the electronic device 1000 may receive sample inputs respectively corresponding to the two classes of classes A and B from the user through user interfaces illustrated in 210 and 220. For example, with respect to class A, a touch input applied at normal pressure may be classified, and with respect to class B, a touch input applied at higher pressure may be classified. Because the strength of the pressure of the touch input may be determined differently for each user, the class to which the user's touch input belongs may be determined according to the force touch model determined according to the characteristics of the sample input.

According to an embodiment, a force touch model for identifying the force touch for the user's touch input may be determined based on the sample inputs received with respect to classes A and B.

Referring to FIG. 2, in 210, the electronic device 1000 according to an embodiment may receive a sample input for class A from the user. For example, while providing a guide message "Please press a blue circle as usual" to the user, the electronic device 1000 may display a blue circle at random positions several times to guide the user to apply a touch input at several positions at normal pressure. Alternatively, as in an example illustrated in 240, a plurality of blue circles may be respectively displayed at random positions on one screen, and the user may be guided to apply a touch input at the position of each blue circle.

The electronic device 1000 according to an embodiment may display that a touch input is being sensed, by an interface change (e.g., an animation in which a touch input area changes to various colors, a neon effect in which an edge of a touch input area shines, or the like). For example, as in an example illustrated in 230, when the user inputs a touch, the color of a touch input area may change, and when the touch input is completed, all touch input area may be converted into a different color and displayed. As in the example illustrated in 240, when a plurality of blue circles are simultaneously displayed, the color of each of the circles may be sequentially converted and displayed according to the user's touch input.

Also, when reception of the user's touch input for a sample input is completed, the electronic device 1000 may provide a feedback indicating that reception of the sample input has been completed, to the user through various output means such as sound, vibration, haptic, and display.

According to an embodiment, whenever a circle is displayed at a random position on the touch screen, the user may apply a touch input at normal pressure according to a guide message. The user may provide the electronic device 1000 with a sample input having a feature of desiring to be classified as a touch input applied at normal pressure. Thus, a force touch model may be determined according to a sample input having a feature desired by the user, and accordingly, an operation intended by the user may be performed in response to the force touch.

Likewise, in 220, the electronic device 1000 according to an embodiment may receive a sample input for class B from the user. For example, while providing a guide message "Please press a blue circle hard" to the user, the electronic device 1000 may display a blue circle at random positions several times to guide the user to apply a touch input at several positions at higher pressure. Alternatively, as in the example illustrated in 240, a plurality of blue circles may be respectively displayed at random positions, and the user may be guided to apply a touch input at the position of each blue circle.

According to an embodiment, whenever a circle is displayed at a random position on the touch screen, the user may apply a touch input at high pressure according to a guide message. The user may provide the electronic device 1000 with a sample input having a feature of desiring to be classified as a touch input applied at high pressure.

FIG. 3 is a diagram illustrating an example of a force touch model according to an embodiment.

Referring to FIG. 3, force touch models 1 to K according to an embodiment may be models respectively pre-trained based on training data classified according to characteristics of users.

According to an embodiment, training data collected from various users may be classified according to various criteria such as age, sex, race, weight, and dominant hand as illustrated in FIG. 3. Criteria for classifying training data according to an embodiment may be determined according to various characteristics of users that may influence the characteristics of the user's touch input. For example, because the strength of a touch input applied by a finger may vary depending on the user's age, sex, and weight, the age, sex, and weight may be used as criteria for classifying training data. Also, different force touch models may be trained according to respective classified training data.

For example, the force touch model 1 may be trained based on training data obtained from male users in their teens and weighing 10 kg or less. Also, the force touch model 2 may be trained based on training data obtained from male users in their teens and weighing 20 kg to 30 kg. Also, the force touch model K may be trained based on training data obtained from male users in their teens and having a thumb as a dominant finger.

However, the present disclosure is not limited thereto, and the force touch models may be pre-trained according to training data classified according to various criteria.

FIG. 4 is a diagram illustrating an example of comparing feature information of a force touch model with feature information of a sample input, according to an embodiment.

Referring to FIG. 4, feature vectors 411, 412, and 413 for the respective classes of the sample input may be respectively compared with feature vectors 421, 422, 423, 431, 432, and 433 for the respective classes of force touch models A and B. According to an embodiment, a force touch model to be used to identify the force touch may be determined among the force touch models A and B according to the comparison result.

The feature vectors 421, 422, 423, 431, 432, and 433 for the respective classes of the force touch models A and B according to an embodiment may be representative values (e.g., average values, median values, mode values, or the like) of feature vectors included in the training data respectively used to train the force touch models A and B. The training data of the force touch model according to an embodiment may include a feature vector of the touch input obtained for each class.

The feature information according to an embodiment may include a feature vector having at least one dimension, and the comparison between pieces of feature information may be performed based on the distance between feature vectors.

According to an embodiment, the feature vectors 421, 422, and 423 of the force touch model A may be compared with the feature vectors 411, 412, and 413 of the sample input corresponding to the respective classes. According to an embodiment, in 420, the feature vectors 421, 422, and 423 of the force touch model A and the feature vectors 411, 412, and 413 of the sample input may be represented, and the distance between two vectors corresponding to the respective classes may be obtained. Also, likewise, in 430, the feature vectors 431, 432, and 433 of the force touch model B and the feature vectors 411, 412, and 413 of the sample input may be represented, and the distance between two vectors corresponding to the respective classes may be obtained.

According to an embodiment, the similarity between the feature vectors of the force touch model A and the sample input and the similarity between the feature vectors of the force touch model B and the sample input may be determined based on the obtained distance.

For example, when the feature vectors 411, 412, and 413 of the sample input and the feature vectors 421, 422, and 423 of the force touch model A are respectively the feature vectors for classes A, B, and C, the distances between 411 and 421, between 412 and 422, and between 413 and 423 may be obtained for the respective classes. Likewise, in 430, with respect to the force touch model B, the distances between 411 and 431, between 412 and 432, and between 413 and 433 may be obtained for the respective classes.

According to an embodiment, it may be determined that the similarity between two pieces of feature information decreases as the distance values between the feature vectors obtained for the respective classes increase. For example, the similarity between two pieces of feature information may be determined based on the average value of the distance values obtained with respect to classes A, B, and C.

Referring to 420 and 430, as the distances between the feature vectors are shorter in the force touch model B than in the force touch model A, it is determined that the similarity of the force touch model B is higher than the similarity of the force touch model A. The electronic device 1000 according to an embodiment may determine, based on the similarity, the force touch model B as a model for identifying the force touch.

However, when the difference between two similarity values is less than or equal to a reference value, the electronic device 1000 according to an embodiment may identify the force touch by using both the force touch models A and B.

FIG. 5 is a diagram illustrating an example of selecting two or more force touch models, according to an embodiment.

Referring to FIG. 5, the force touch models A and B may be selected according to a similarity value with respect to feature information 510 of the sample input that is input by the user.

As illustrated in FIG. 5, the feature information 510 of the sample input according to an embodiment may have a similar similarity with respect to each of the feature information of the force touch model A and the feature information of the force touch model B. According to an embodiment, as the feature information 510 of the sample input do not exactly match the feature information of the force touch model A or B and the similarity values with respect to the feature information of the sample input obtained with respect to the force touch models A and B are different from each other by a reference value or less, the two models may be selected together as models for identifying the force touch.

The electronic device 1000 according to an embodiment may identify the force touch by using both the selected force touch models A and B.

FIG. 6 is a diagram illustrating an example of identifying a force touch by using two or more force touch models, according to an embodiment.

Referring to FIG. 6, when force touch models A to M are selected based on the similarity, the electronic device 1000 may obtain an average model 610 based on the force touch models A to M. According to an embodiment, a force touch for the user's input may be identified based on the average model 610.

The average model 610 according to an embodiment may be obtained based on an average value or a weighted average value of weight values respectively included in the force touch models A to M. For example, weight values constituting the respective force touch models may respectively correspond to each other between the force touch models, and the average model 610 may be newly constructed based on an average value between weight values corresponding to each other. Also, without being limited to the above average value, the average model 610 may be obtained based on a median value, a mode value, or the like of the weight values. Also, without being limited to the weight value constituting the force touch model, the average model 610 may be obtained based on an average value, a median value, a mode value, or the like between various types of values that may correspond to each other between the force touch models.

FIG. 7 is a diagram illustrating an example of identifying a force touch by using two or more force touch models, according to an embodiment.

Referring to FIG. 7, the result of identifying a force touch for the user's touch input may be output by an ensemble model 710 including two or more force touch models selected according to a sample input. After at least one force touch model for identifying the force touch is determined, by obtaining an ensemble model from the at least one force touch model, the electronic device 1000 according to an embodiment may identify the force touch according to the ensemble model with respect to the user's touch input subsequently received.

With respect to the user's input, the ensemble model 710 according to an embodiment may output one piece of output information selected among a plurality of pieces of output information (e.g., information about the class of the force touch) output by two or more force touch models, as the result of identifying the force touch.

In 711, the electronic device 1000 according to an embodiment may determine information to be output as the result of identifying the force touch based on a plurality of pieces of output information. The plurality of pieces of output information according to an embodiment may include probability information for each class. The probability information according to an embodiment may include a probability value representing the possibility that the user's touch input will belong to each class.

The electronic device 1000 according to an embodiment may determine output information of the ensemble model 710 among the plurality of pieces of output information based on the probability value included in each piece of output information.

According to an embodiment, the output information of the ensemble model 710 may be determined based on an average value of the probability values for each class included in the plurality of pieces of output information. For example, when the probability values for classes A, B, and C included in the output information of the force touch models A and B are (0.5 0.25 0.25) and (0.3 0.4 0.3), the output information of the ensemble model 710 may include (0.4 0.325 0.275).

As another example, the electronic device 1000 may determine the output information of the ensemble model 710 based on a probability value determined to have a high accuracy in the plurality of pieces of output information. For example, output information determined to include a high-accuracy probability value among the plurality of pieces of output information may be determined as the output information of the ensemble model 710. The probability value according to an embodiment may be determined to be more accurate as the difference of the probability value from another class in the output information increases; however, the present disclosure is not limited thereto, and the accuracy of the probability value may be determined according to various methods.

For example, when the probability values for classes A, B, and C included in the output information of the force touch models A and B are respectively (0.5 0.25 0.25) and (0.3 0.4 0.3), as it is determined that the accuracy of the output information of the force touch model A is higher, the output information of the force touch model A may be determined as the output information of the ensemble model. Thus, an operation corresponding to class A may be performed according to the output information of the force touch model A.

However, the present disclosure is not limited thereto, and the output information of the ensemble model 710 may be determined from the plurality of output information according to various methods.

The electronic device 1000 according to an embodiment may identify the force touch based on two or more force touch models according to any one of the average model 610 of FIG. 6 or the ensemble model 710 of FIG. 7. According to an embodiment, one of the average model method and the ensemble model method may be determined according to the performance of the electronic device 1000.

According to the ensemble model according to an embodiment, an inference operation in each force touch model may be repeatedly performed as many times as the number of force touch models included in the ensemble model. Thus, an operation by the ensemble model may have a larger amount of calculation than the average model in which one inference operation is performed. Instead, according to the ensemble model, because the output information may be selected by further considering the probability value included in the output information of each force touch model, the accuracy thereof may be higher than that of the average model.

The electronic device 1000 according to an embodiment may obtain a force touch model for identifying the force touch according to one of the average model and the ensemble model by considering the performance of the electronic device 1000 from which the force touch model is inferred. For example, when it is determined that the performance of the electronic device 1000 is suitable for processing the ensemble model, the force touch may be identified by the obtained force touch model according to the ensemble model.

According to an embodiment, when an operation for identifying the force touch according to the average model or the ensemble model is performed in an external device (e.g., a server, a cloud, or the like) other than the electronic device 1000, one model may be determined among the average model and the ensemble model by considering the performance of the external device.

Without being limited to the performance of the above device, the electronic device 1000 may determine one model among the average model and the ensemble model based on various criteria.

FIG. 8 is a block diagram for describing an internal configuration of an electronic device 1000 according to an embodiment.

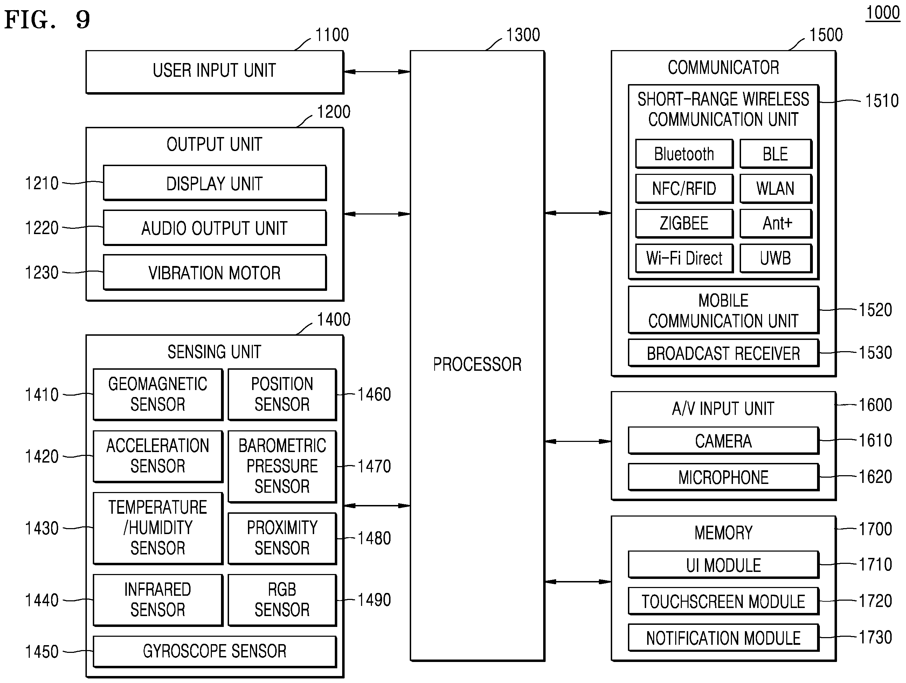

FIG. 9 is a block diagram for describing an internal configuration of an electronic device 1000 according to an embodiment.

Referring to FIG. 8, the electronic device 1000 may include a processor 1300, a user input unit 1100, and a memory 1700. However, not all of the components illustrated in FIG. 8 are necessary components of the electronic device 1000. The electronic device 1000 may be implemented by more components than the components illustrated in FIG. 8 or may be implemented by less components than the components illustrated in FIG. 8.

For example, as illustrated in FIG. 9, the electronic device 1000 according to an embodiment may further include an output unit 1200, a sensing unit 1400, a communicator 1500, and an audio/video (A/V) input unit 1600 in addition to the processor 1300, the user input unit 1100, and the memory 1700.

The user input unit 1100 may refer to a unit through which the user inputs data for controlling the electronic device 1000. For example, the user input unit 1100 may include, but is not limited to, a key pad, a dome switch, a touch pad (e.g., a capacitive overlay type, a resistive overlay type, an infrared beam type, a surface acoustic wave type, an integral strain gauge type, or a piezoelectric type), a jog wheel, and/or a jog switch.

The user input unit 1100 according to an embodiment may receive the user's touch input. According to an embodiment, with respect to the user's touch input received through the user input unit 1100, the electronic device 1000 may identify a force touch and perform an operation corresponding to the identified result.

The output unit 1200 may output an audio signal, a video signal, or a vibration signal and may include a display unit 1210, an audio output unit 1220, and a vibration motor 1230. The output unit 1200 according to an embodiment may output information about an operation corresponding to the result of identifying the force touch.

The display unit 1210 may display and output information processed by the electronic device 1000. Moreover, when the display unit 1210 and a touch pad are configured as a touch screen by forming a layer structure, the display unit 1210 may be used as an input device in addition to an output device. The display unit 1210 may include at least one of a liquid crystal display, a thin film transistor-liquid crystal display, an organic light emitting diode display, a flexible display, a three-dimensional (3D) display, or an electrophoretic display. Also, depending on the type of the electronic device 1000, the electronic device 1000 may include two or more display units 1210.

The audio output unit 1220 may output audio data received from the communicator 1500 or stored in the memory 1700. The vibration motor 1230 may output a vibration signal. Also, the vibration motor 1230 may output a vibration signal when a touch is input to the touch screen. The audio output unit 1220 and the vibration motor 1230 according to an embodiment may output information about an operation corresponding to the result of identifying the force touch.

The processor 1300 may generally control an overall operation of the electronic device 1000. For example, the processor 1300 may control the overall operations of the user input unit 1100, the output unit 1200, the sensing unit 1400, the communicator 1500, and the A/V input unit 1600 by executing the programs stored in the memory 1700.

The electronic device 1000 may include at least one processor 1300. For example, the electronic device 1000 may include various types of processors such as a central processing unit (CPU), a graphics processing unit (GPU), and a neural processing unit (NPU).

The processor 1300 may be configured to process commands of computer programs by performing basic arithmetics, logics, and input/output operations. The commands may be provided to the processor 1300 from the memory 1700 or may be received through the communicator 1500 and provided to the processor 1300. For example, the processor 1300 may be configured to execute commands according to program codes stored in a recording device such as a memory.

The processor 1300 according to an embodiment may provide feature information about the sample input received from the user to identify the force touch and feature information about the touch input included in the training data used to train a plurality of force touch models. Also, the processor 1300 may determine a force touch model for identifying the user's force touch among the plurality of force touch models based on the similarity between the obtained two pieces of feature information. The processor 1300 according to an embodiment may identify a force touch for the user's touch input based on the determined force touch model and perform an operation corresponding to the identified result.

When two or more force touch models are determined, the processor 1300 according to an embodiment may obtain an average model or an ensemble model from the determined force touch models and identify the user's force touch based thereon.

Also, the processor 1300 according to an embodiment may identify a force touch for the user's touch input further based on sensor information (e.g., barometric pressure information) collected together while the user's touch input is received.

The sensing unit 1400 may sense a state of the electronic device 1000 or a state around the electronic device 1000 and transmit the sensed information to the processor 1300.

The sensing unit 1400 may include, but is not limited to, at least one of a geomagnetic sensor 1410, an acceleration sensor 1420, a temperature/humidity sensor 1430, an infrared sensor 1440, a gyroscope sensor 1450, a position sensor (e.g., GPS) 1460, a barometric pressure sensor 1470, a proximity sensor 1480, or an RGB sensor (illuminance sensor) 1490.

The sensing unit 1400 according to an embodiment may collect various types of sensing information while the user's touch input is received, and the collected sensing information may be used to identify a force touch for the user's touch input.

The communicator 1500 may include one or more components for allowing the electronic device 1000 to communicate with a server or an external device (not illustrated). For example, the communicator 1500 may include a short-range wireless communication unit 1510, a mobile communication unit 1520, and a broadcast receiver 1530.

The short-range wireless communication unit 1510 may include, but is not limited to, a Bluetooth communication unit, a Bluetooth Low Energy (BLE) communication unit, a near field communication unit, a WLAN (WiFi) communication unit, a ZigBee communication unit, an infrared data association (IrDA) communication unit, a WiFi Direct (WFD) communication unit, an Ultra Wideband (UWB) communication unit, and/or an Ant+ communication unit.

The mobile communication unit 1520 may transmit/receive wireless signals to/from at least one of a base station, an external terminal, or a server on a mobile communication network. Here, the wireless signals may include voice call signals, video call signals, or various types of data according to transmission/reception of text/multimedia messages.

The broadcast receiver 1530 may receive broadcast signals and/or broadcast-related information from the outside through broadcast channels. The broadcast channels may include satellite channels and terrestrial channels. In some embodiments, the electronic device 1000 may not include the broadcast receiver 1530.

According to an embodiment, the communicator 1500 may transmit/receive data for identifying the force touch to/from an external device (not illustrated). For example, the communicator 1500 may receive a plurality of pre-trained force touch models from an external server (not illustrated) to identify the force touch.

The A/V input unit 1600 may be for inputting an audio signal or a video signal and may include a camera 1610 and a microphone 1620. The camera 1610 may obtain an image frame such as a still image or a moving image through an image sensor in a video call mode or a photographing mode. The image obtained through the image sensor may be processed through the processor 1300 or a separate image processor (not illustrated). The microphone 1620 may receive an external audio signal and process the same into electrical voice data.

A video or audio signal generated by the A/V input unit 1600 according to an embodiment may be used to identify the force touch model. For example, while the user's touch input is received, the electronic device 1000 may identify a force touch for the user's touch input by further using information obtained based on the video or audio signal generated by the A/V input unit 1600.

The memory 1700 may store one or more programs for processing and controlling by the processor 1300 and may store data that is input to the electronic device 1000 or output from the electronic device 1000.

The memory 1700 according to an embodiment may store various types of data that may be used to identify the force touch. For example, the memory 1700 may store a plurality of force touch models for identifying the force touch.

The memory 1700 may include at least one type of storage medium from among flash memory type, hard disk type, multimedia card micro type, card type memory (e.g., SD or XD memory), random access memory (RAM), static random access memory (SRAM), read only memory (ROM), electronically erasable programmable read only memory (EEPROM), programmable read only memory (PROM), magnetic memory, magnetic disk, and optical disk.

The programs stored in the memory 1700 may be classified into a plurality of modules according to their functions and may be classified into, for example, a user interface (UI) module 1710, a touch screen module 1720, and a notification module 1730.

The UI module 1710 may provide a specialized UI, a graphical user interface (GUI), or the like that interoperates with the electronic device 1000 for each application. The touch screen module 1720 may sense a user's touch gesture on a touch screen and transmit information about the touch gesture to the processor 1300. The touch screen module 1720 according to some embodiments may recognize and analyze a touch code. The touch screen module 1720 may include separate hardware including a controller.

Various sensors may be provided inside or near the touch screen to sense a proximity touch or a touch on the touch screen. A tactile sensor may be an example of a sensor for sensing a touch on the touch screen. The tactile sensor may refer to a sensor for sensing a contact with a particular object to a degree or more that may be felt by the human. The tactile sensor may detect various information such as the roughness of a contact surface, the hardness of a contact object, and the temperature of a contact point.

The user's touch gesture may include tap, touch & hold, double tap, drag, pan, flick, drag and drop, swipe, and the like.

The notification module 1730 may generate a signal for notifying the occurrence of an event in the electronic device 1000.

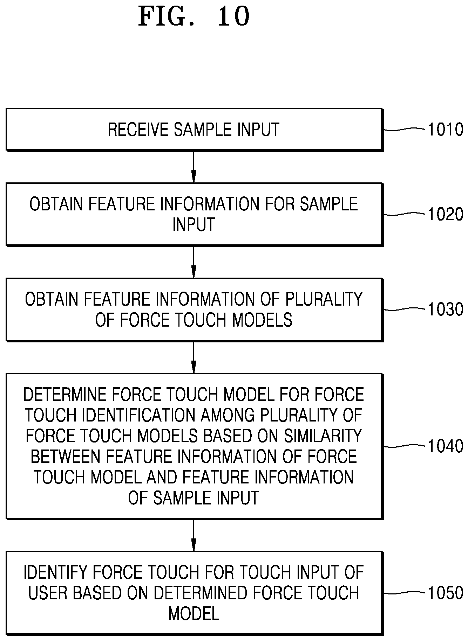

FIG. 10 is a flowchart illustrating a method of identifying a force touch, according to an embodiment.

Referring to FIG. 10, in operation 1010, the electronic device 1000 according to an embodiment may receive at least one sample input from the user. The sample input according to an embodiment may be an example of the user's touch input for obtaining at least one force touch model corresponding to the characteristics of the user. According to an embodiment, as a force touch for the user's touch input subsequently received in the electronic device 1000 is identified based on the obtained force touch model, an operation corresponding to the force touch may be performed.

According to an embodiment, sample inputs respectively corresponding to a plurality of classes that may correspond to different operations may be received from the user. For example, the electronic device 1000 may receive the user's sample input for class A by requesting the user's sample input corresponding to class A. Also, the electronic device 1000 may receive the user's sample input for class B by requesting the user's sample input corresponding to class B. Also, the electronic device 1000 may receive the user's sample input for class C by requesting the user's sample input corresponding to class C. However, the present disclosure is not limited thereto, and sample inputs having different characteristics may be received from the same user with respect to various numbers of classes.

According to an embodiment, classes A, B, and C may respectively correspond to different operations, and as the class to which the user's touch input belongs is determined by the force touch model, an operation corresponding to the user's touch input may be performed.

In operation 1020, the electronic device 1000 according to an embodiment may obtain feature information about each sample input received in operation 1010. According to an embodiment, the feature information of the sample input may be obtained by a feature extraction model pre-trained to output feature information about the touch input.

Also, according to an embodiment, the feature information of the sample input may be obtained further based on sensor information (e.g., barometric pressure information) that may be collected while the sample input is input, in addition to information related to the input characteristics of the sample input itself. In this case, the feature extraction model used to obtain the feature information of the sample input may be a model pre-trained based on the training data further including the above sensor information in addition to the information related to the input characteristics of the sample input itself.

However, the present disclosure is not limited thereto, and the feature information of the sample input may be obtained based on various types of information related to the sample input.

The feature information of the sample input according to an embodiment may be obtained for each class. For example, with respect to at least one sample input obtained with respect to class A, at least one piece of feature information may be obtained, and a representative value (e.g., an average value, a median value, or a mode value, or the like) for at least one piece of feature information (e.g., a feature vector) may be obtained as feature information of the sample input for class A. Likewise, with respect to other classes such as class B and class C, feature information about the sample input may be obtained.

In operation 1030, the electronic device 1000 according to an embodiment may obtain a plurality of force touch models for identifying the force touch and obtain feature information about the touch input of the training data used to train each force touch model.

The plurality of force touch models according to an embodiment may be artificial intelligence models corresponding to the characteristics of touch inputs of different users. Each force touch model according to an embodiment may be used to identify force touches having different touch input characteristics and received from the user and perform an operation.

The electronic device 1000 according to an embodiment may obtain feature information about each force touch model in order to identify a force touch model corresponding to feature information of the user's sample input. The feature information about the force touch model according to an embodiment may be obtained by obtaining feature information about the touch input of the training data used to train the force touch model. However, the present disclosure is not limited thereto, and the feature information about the force touch model may be obtained according to various methods capable of obtaining the user's input characteristics corresponding to the force touch model.

When the feature information of the sample input according to an embodiment is obtained further based on the sensor information in addition to the sample input, the feature information of the force touch model may also be obtained further based on the sensor information sensed while the touch input of the training data is received. In this case, the force touch model may be a model pre-trained based on the touch input and the sensor information. For example, the training data used to train the force touch model may further include sensor information corresponding to the touch input in addition to information about the touch input.

The feature information of the force touch model according to an embodiment may be obtained for each class like the feature information of the sample input. According to the class information corresponding to the touch input of the training data according to an embodiment, a representative value of the feature information of the touch input belonging to the same class may be obtained as the feature information of the class.

In operation 1040, the electronic device 1000 according to an embodiment may obtain a force touch model that may correspond to the characteristic of the user's touch input, among the plurality of force touch models, based on the similarity between the two pieces of feature information obtained in operations 1020 and 1030.

The similarity according to an embodiment may be obtained based on the difference between the feature information obtained for each class. For example, the distance value between the two pieces of feature information may be obtained for each class, and the similarity between the two pieces of feature information may be determined based on a representative value (e.g., an average value, a median value, or the like) of the distance values obtained for each class. For example, it may be determined that the similarity decreases as the representative value of the distance values increases. However, the present disclosure is not limited thereto, and the similarity may be obtained according to various methods for obtaining the similarity between feature information.

According to an embodiment, two or more force touch models obtained based on the similarity may be used to identify the force touch in operation 1050 below. According to an embodiment, not only the highest-priority force touch model among the plurality of force touch models arranged according to the similarity but also at least one force touch model that is not different by a reference value or more from the similarity of the highest-priority force touch model may be further obtained as a force touch model for identify the force touch.

In operation 1050, the electronic device 1000 according to an embodiment may identify a force touch for the user's touch input based on the force touch model obtained in operation 1040 and perform an operation according to the result of identifying the force touch. The electronic device 1000 according to an embodiment may obtain information about a class corresponding to the user's touch input by inputting information about the user's touch input into the force touch model and perform an operation corresponding to the class.

According to an embodiment, when the sensor information is further used to obtain the feature information in operations 1020 and 1030, sensor information corresponding to the user's touch input may be further used in operation 1050 as well. According to an embodiment, while the user's touch input is received, sensor information (e.g., barometric pressure information) sensed by the electronic device 1000 may also be input into the force touch model.

When two or more force touch models are determined in operation 1040, an average model or an ensemble model may be obtained from the determined force touch models and a force for the user's touch input may be obtained based on the obtained model in operation 1050. According to an embodiment, one of the average model and the ensemble model may be obtained based on two or more force touch models according to the performance of the electronic device 1000.

The average model according to an embodiment may be obtained based on an average value of the weight values constituting the force touch model.

Also, the ensemble model may be configured such that output information of the ensemble model is determined based on the information output from each of the two or more force touch models determined in operation 1040. The output information according to an embodiment may further include information about the probability that each class will correspond to the class of the touch input, and the output information of the ensemble model may be determined based on the probability value.

The output information of the ensemble model according to an embodiment may be determined based on the average value of the probability values respectively included in a plurality of pieces of output information.

Also, according to an embodiment, the output information of the ensemble model 710 may be determined based on a probability value determined to have a high accuracy in the plurality of pieces of output information. For example, in each output information, it may be determined that the accuracy increases as the difference between the probability value for each class and the probability value for another class increases. Thus, the output information of the ensemble model may be determined based on the output information determined to have a high accuracy based on the probability value.

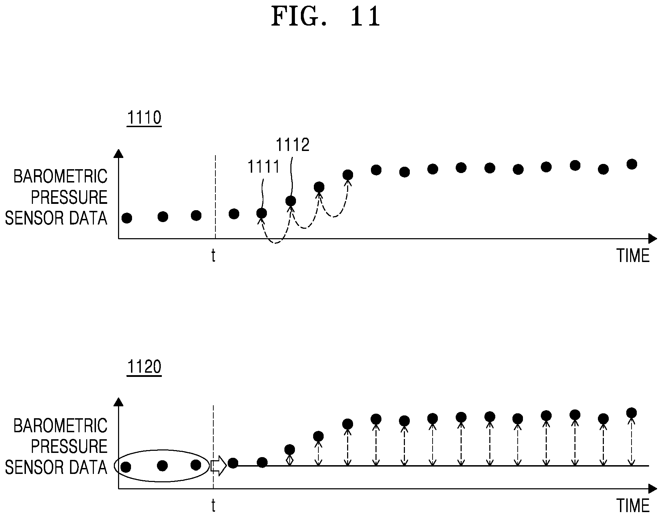

FIG. 11 is a diagram illustrating an example of barometric pressure information collected by an electronic device 1000 while a user's touch input is received, according to an embodiment.

When the user's touch input is sensed, the electronic device 1000 according to an embodiment may obtain at least one barometric pressure value measured by the barometric pressure sensor 1470 while the touch input is sensed. The barometric pressure information including the barometric pressure value according to an embodiment may be input as sensor information into the force touch model together with information about the user's touch input and may be used to identify the force touch. According to an embodiment, because the strength of the user's touch input and a variation in the barometric pressure value may be proportional to each other, a force touch for the user's touch input may be identified further based on the barometric pressure information.

The barometric pressure value measured by the barometric pressure sensor 1470 according to an embodiment may be obtained, for example, in units of hectopascal such as 1008.6, 1008.8, ..., 1011.2; however, the present disclosure is not limited thereto, and it may be obtained according to various units and representation methods. However, because the amount of calculation increases as a greater number of bits are used to represent one barometric pressure value, the barometric pressure value may be changed according to a variation in the barometric pressure value and a difference value thereof with respect to a reference value as illustrated in 1110 and 1120 of FIG. 11 such that the amount of calculation may be reduced. According to an embodiment, because the range of the barometric pressure value that may be changed by the touch input is relatively small, when the barometric pressure value is changed by the variation therein or the difference value thereof with respect to the reference value, the amount of calculation required to process the barometric pressure value may be reduced.

Referring to 1110 of FIG. 11, as the user's touch input is sensed at a time t, the electronic device 1000 according to an embodiment may measure a barometric pressure value after the time t by using the barometric pressure sensor 1470. The barometric pressure information obtained for identifying the force touch according to an embodiment may be obtained based on the difference between the previously measured barometric pressure value and the currently measured barometric pressure value. For example, the barometric pressure value of 1112 may be changed by the difference value between the barometric pressure value of 1112 and the barometric pressure value of 1111, and the barometric pressure information may be obtained based on the change value. Thus, according to an embodiment, because the number of bits used to represent the barometric pressure value is reduced as the barometric pressure information is obtained by the difference value between the barometric pressure values, the amount of calculation may be reduced.

Referring to 1120 of FIG. 11, the electronic device 1000 according to an embodiment may continuously obtain and store barometric pressure values from before the user's touch input is sensed at the time t.

For example, the electronic device 1000 may continuously obtain barometric pressure values but may store only n (e.g., 3) recently-obtained barometric pressure values based on the current time and delete an old barometric pressure value whenever a new barometric pressure value is obtained. As detecting the user's touch input at the time t, the electronic device 1000 according to an embodiment may change a subsequently-obtained barometric pressure value based on a representative value (e.g., an average value, a median value, or the like) of n barometric pressure values obtained before the time t. For example, the barometric pressure values obtained after the time t may be changed by the difference value from the representative value of n barometric pressure values.

According to an embodiment, because the value measured by the barometric pressure sensor 1470 may be continuously changed according to the surrounding environment of the electronic device 1000, the barometric pressure value obtained after the time t may be changed based on the recently-obtained barometric pressure value. Thus, according to an embodiment, because the number of bits used to represent the barometric pressure value is reduced as the barometric pressure information is obtained by the difference value between the barometric pressure values, the amount of calculation may be reduced.

The electronic device 1000 according to an embodiment may identify a force touch for the user's touch input based on the barometric pressure information obtained according to 1110 or 1120 and perform an operation according to the identification result.

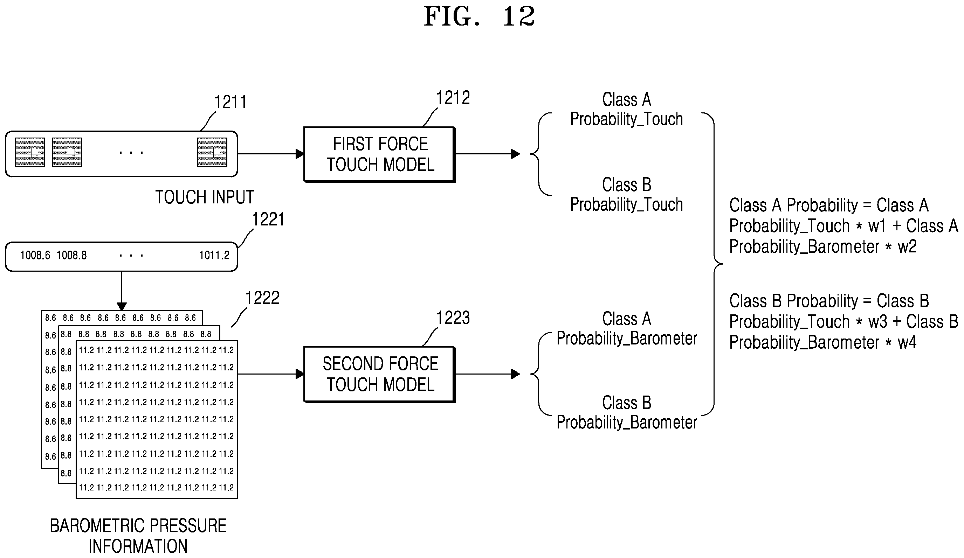

FIG. 12 is a diagram illustrating an example of identifying a force touch based on barometric pressure information, according to an embodiment.

Referring to FIG. 12, a first force touch model 1212 according to an embodiment may be an artificial intelligence model pre-trained such that information about the class of the force touch to which the user's touch input belongs may be output based on information about the user's touch input.

The information about the user's touch input that may be input into the first force touch model 1212 according to an embodiment may include consecutive data 1211 representing the touch position and strength at which the touch input is sensed at each time while the user's touch input is received. For example, the data 1211 representing the touch position and strength at which the touch input is sensed on an n×n image may be consecutively obtained while the user's touch input is received.

As information 1211 about the touch input is input into the first force touch model 1212 according to an embodiment, information about the probability that the user's touch input will correspond to each of classes A and B may be obtained as output information. In FIG. 12, information about the probability that the user's touch input will correspond to classes A and B is represented as Class A Probability_Touch and Class B Probability_Touch respectively.

Unlike the first force touch model 1212, a second force touch model 1223 according to an embodiment may be an artificial intelligence model pre-trained such that information about the class of the force touch to which the user's touch input belongs may be output without information about the user's touch input based on barometric pressure information 1222 among the sensor information sensed while the user's touch input is received.

However, the present disclosure is not limited thereto, and the second force touch model 1223 may be an artificial intelligence model pre-trained such that information about the class of the force touch to which the user's touch input belongs may be output as a result of identifying the force touch based on sensor information variously represented in addition to the barometric pressure information 1222.

The first force touch model 1212 according to an embodiment may be a force touch model determined among a plurality of first force touch models by using the sample input received from the user. Also, the second force touch model 1223 may be an artificial intelligence model pre-trained to correspond to the determined first force touch model 1212. According to an embodiment, because a variation in the barometric pressure value may be proportional to the strength of the touch input, a class corresponding to the barometric pressure information may be determined according to the characteristics of the user's touch input. Thus, the second force touch model 1223 may be provided for each of a plurality of first force touch models 1212, and when one or more first force touch models 1212 are determined among the plurality of first force touch models 1212, the second force touch model 1223 corresponding to each of the first force touch models 1212 may be obtained.

According to an embodiment, because the second force touch model 1223 is further used in addition to the first force touch model 1212, the force touch may be identified further based on sensor information related to the touch input in addition to information about the touch input. According to an embodiment, without needing to re-train the first force touch model 1212 such that the force touch may be identified by further using the sensor information in addition to the information about the touch input, by further using only the second force touch model 1223, the force touch may be identified further based on the sensor information in addition to the information about touch input. Thus, when attempting to identify the force touch by further using the sensor information related to the touch input, the electronic device 1000 according to an embodiment may identify a force touch for the user's touch input by further obtaining a plurality of second force touch models 1223 respectively corresponding to a plurality of first force touch models 1212.

The second force touch model 1223 according to an embodiment may be pre-trained like in the case where the force touch model is trained based on the training data illustrated in FIG. 3. The training data for training the second force touch model 1223, which includes the barometric pressure information collected while the touch input is received, according to an embodiment may be classified according to the characteristics of the user who performs the touch input, and a plurality of second force touch models 1223 may be respectively trained based on the classified training data. As for the second force touch model 1223 according to an embodiment, the first force touch model 1212 corresponding thereto may be determined according to the user's characteristics used to classify the training data.

However, the present disclosure is not limited thereto, and the second force touch model 1223 may be an artificial intelligence model trained according to various methods to identify a force touch for the user's touch input based on the sensor information related to the touch input.

The electronic device 1000 according to an embodiment may obtain a plurality of barometric pressure values 1221 consecutively measured by the barometric pressure sensor while the user's touch input is received. The plurality of barometric pressure values 1221 according to an embodiment may include barometric pressure values respectively corresponding to the data 1211 of the touch input.

In order to reduce the amount of calculation, the barometric pressure value 1221 may be changed as 1222 according to the example illustrated in 1110 or 1120 of FIG. 11. The barometric pressure information 1222 according to an embodiment may be obtained as the changed barometric pressure values 1221 are consecutively arranged on an image having a size of n×n equal to the image size of the data 1211 of the touch input. However, the present disclosure is not limited thereto, and the barometric pressure information 1222 may include data modified from the barometric pressure value 1221 into various forms in order to be suitable to be input into the second force touch model 1223.

As the barometric pressure information 1223 is input into the second force touch model 1223 according to an embodiment, information about the probability that the user's touch input will correspond to each of classes A and B may be obtained as output information. In FIG. 12, information about the probability that the user's touch input will correspond to classes A and B is represented as Class A Probability_Barometer and Class B Probability_Barometer respectively.

The second force touch model 1223 according to an embodiment may output probability information about the class of the force touch to which the user's touch input belongs, according to a function of Equation 1 below, instead of an artificial intelligence model.

[Equation 1]

$$p = sigmoid(\max(b) - \min(b))$$

In Equation 1, "b" denotes a barometric pressure value, and "p" that is probability information about the class of the force touch to which the user's touch input belongs may be determined according to the difference between the minimum and maximum values of barometric pressure values input into the function. Here, "p" may have a value between 0 and 1 according to a sigmoid function.

According to an embodiment, when the classes are divided into classes A and B according to the difference in the strength of the touch input, "p" may be determined as a probability value of class A and "1-p" may be determined as a probability value of class B. For example, as "p" increases, the probability of class A classified as a class with the greater strength may increase. On the other hand, as "p" decreases, the probability of class B classified as a class with the smaller strength may increase.

According to the function of Equation 1 according to an embodiment, when probability information is obtained based on the barometric pressure information, the probability information may be obtained based on the barometric pressure value 1221 without needing to change the barometric pressure information 1222 from the barometric pressure value 1221.

According to an embodiment, the value of the probability that the user's touch input will correspond to each class may be determined based on Class A Probability_Touch, Class B Probability_Touch, Class A Probability_Barometer, and Class B Probability_Barometer that are output information of the first force touch model 1212 and output information of the second force touch model 1223.

According to an embodiment, as illustrated in FIG. 12, the probability value for each class may be obtained based on the weighted sum of the probability values obtained by the first force touch model 1212 and the second force touch model 1223. For example, the probability that the user's touch input will correspond to class A may be determined as the weighted sum of Class A Probability_Touch and Class A Probability_Barometer. Also, the probability that the user's touch input will correspond to class B may be determined as the weighted sum of Class B Probability_Touch and Class B Probability_Barometer.

Weight values w1, w2, w3, and w4 applied to each probability value according to an embodiment may be determined according to the accuracy of each probability value. According to an embodiment, the values of w1, w2, w3, and w4 may be determined to satisfy the conditions of w1+w2=1 and w3+w4=1.

For example, when the difference between the probability value of Class A Probability_Touch and the probability value of Class B Probability_Touch is greater a reference value, it may be determined that the accuracy of the probability values obtained by the first force touch model 1212 is high. Thus, the probability value obtained by the second force touch model 1223 may not be used, and w1 and w2 may be respectively determined as 1 and 0 such that the probability value of class A may be determined as the probability value obtained by the first force touch model 1212. Also, the weight values w3 and w4 for class B may be respectively determined as 1 and 0 as in the probability value of class A.

On the other hand, when the difference between the probability value of Class A Probability_Touch and the probability value of Class B Probability_Touch is less than or equal to the reference value, it may be determined that the accuracy of the probability values obtained by the first force touch model 1212 is low. Thus, predetermined values of w1, w2, w3, and w4 may be used such that the probability value obtained by the second force touch model 1223 may be additionally used.

The values of w1, w2, w3, and w4 according to an embodiment may be predetermined through experimentation such that optimal probability value may be obtained based on the probability value of the first force touch model 1212 and the probability value of the second force touch model 1223. For example, as an experiment is performed several times with respect to the electronic device 1000 placed in a certain experiment environment, the values of w1, w2, w3, and w4 for obtaining the optimal probability value may be predetermined.

Also, according to an embodiment, when the reliability of the value measured by the barometric pressure sensor changes as the barometric pressure of the electronic device 1000 changes, the values of w1, w2, w3, and w4 may be adjusted to suitable values. However, the present disclosure is not limited thereto, and the values of w1, w2, w3, and w4 may be values for obtaining the optimal probability value and may be determined according to various methods.

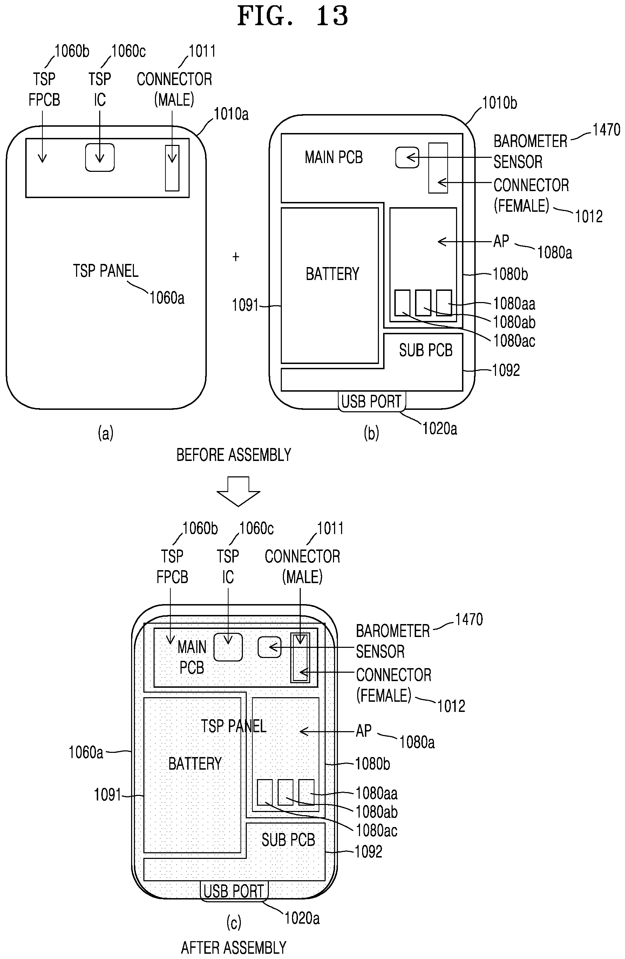

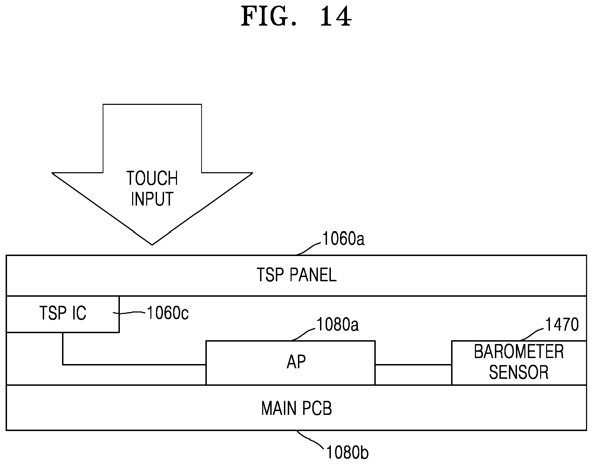

The electronic device 1000 capable of identifying a force touch based on the barometric pressure information obtained by the barometric pressure sensor 1470 according to an embodiment may be configured as an example illustrated in FIGS. 13 and 14 below.

FIG. 13 is a diagram illustrating a configuration arrangement of an electronic device according to an embodiment.

Referring to FIG. 13, a housing of the electronic device 1000 according to an embodiment may include a first plate 1010a and a second plate 1010b. The housing according to an embodiment may refer to an external case including the internal components of the electronic device 1000 including the barometric pressure sensor 1470 (e.g., the processor, the output unit, the sensing unit, the communicator, the memory, the A/V input unit, and the like). The barometric pressure sensor 1470 may sense a barometric pressure change in the space of the housing and provide the same to the processor 1300. The barometric pressure sensor 1470 may be located in at least a portion of the space of the housing. The barometric pressure sensor 1470 may be located in a space in which at least a portion of the space of the housing is sealed.

The first plate 1010a may face in a first direction, and the second plate 1010b may face in a second direction. The first plate 1010a and the second plate 1010b may include a side member (not illustrated) surrounding the space between the two plates. The side member may be separated from the first plate 1010a or the second plate 1010b or may be partially coupled thereto. The first plate 1010a and the second plate 1010b may be coupled by the side member to form the housing of the electronic device 1000. At least a portion of the space in the housing may be formed such that a fluid may not communicate with the outside of the housing.

According to an embodiment, the display unit 1210 may be exposed through at least a portion of the first plate 1010a and may be located inside the housing. The display unit 1210 may include a TSP panel (Touch Screen Panel) 1060a, a TSP FPCB (Flexible PCB) 1060b, and a TSP IC 1060c. The TSP panel 1060a may be a transparent touch panel and may be connected to the TSP FPCB 1060b, and the TSP IC 1060c may be mounted on the TSP FPCB 1060b.

According to an embodiment, the second plate 1010b may include a barometer sensor 1470 (e.g., the barometric pressure sensor 1470) that may sense a barometric pressure change in the space in the housing generated by the coupling of the first plate 1010a and the second plate 1010b. The barometric pressure sensor 1470 may be located in at least a portion of the space in the housing. At least a portion of the space in the housing may be sealed, and the barometric pressure sensor 1470 may be located in the sealed space.

According to an embodiment, the second plate 1010b may include a main PCB 1080b on which the barometric pressure sensor 1470 and an application processor (AP) 1080a are mounted. The processor 1300 may include the AP 1080a and the main PCB 1080b. The TSP FPCB 1060b and the main PCB 1080b may be connected by a connector (a male connector 1011 and a connector female 1012). The second plate 1010b may include a battery 1091, a sub PCB 1092, and a USB port 1020a. The battery 1091 may be charged with power supplied from the outside through the USB port 1020a connectable to the outside and may be discharged according to the use of the electronic device 1000. The sub PCB 1092 may mean a PCB excluding the main PCB 1080b on which the AP 1080a is mounted. The sub PCB 1092 may not be implemented in the electronic device 1000 depending on the type of the electronic device 1000.

The AP 1080a according to an embodiment may further include various types of processing units. For example, the AP 1080a may further include a graphics processing unit (GPU) 1080aa, a neural network processing unit (NPU) 1080ab, a tensor processing unit (TPU) 1080ac, and/or the like. The AP 1080a may use various processing units such as the GPU 1080aa, the NPU 1080ab, and the TPU 1080ac to perform an operation for identifying the force touch of the touch input according to an embodiment.

FIG. 14 is a cross-sectional view illustrating a configuration arrangement of an electronic device 1000 according to an embodiment.

Referring to FIG. 14, when a touch input occurs on the TSP panel 1060a, the TSP IC 1060c may identify a position at which the touch input has occurred. The TSP IC 1060c may transmit the occurrence of the touch input on the TSP Panel 1060a to the AP 1080a of the processor 1300 and may further transmit the position at which the touch input has occurred. The AP 1080a may be mounted on the main PCB 1080b. The barometer sensor 1470 (e.g., the barometric pressure sensor 1470) may sense a barometric pressure value according to the touch input generated on the TSP panel 1060a. The barometric pressure sensor 1470 may transmit the sensed barometric pressure value to the AP 1080a. According to an embodiment, a force touch for the user's touch input according to the embodiment of FIG. 12 described above may be identified based on the barometric pressure value sensed by the barometric pressure sensor 1470.

According to an embodiment, as a force touch is identified according to a force touch model that may match the user's input characteristics, a force touch input suitable for the user's intention may be identified.

According to at least one of the described embodiments, as a force touch is identified according to a force touch model that may match the user's input characteristics, a force touch input suitable for the user's intention may be identified.

The machine-readable storage medium may be provided in the form of a non-transitory storage medium. Here, the term "non-transitory storage medium" may mean that the storage medium is a tangible device and does not include signals (e.g., electromagnetic waves), and may mean that data may be semipermanently or temporarily stored in the storage medium. For example, the "non-transitory storage medium" may include a buffer in which data is temporarily stored.

According to an embodiment, the method according to various embodiments of the present disclosure may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store (e.g., Play Store™) or directly between two user devices (e.g., smartphones). In the case of online distribution, at least a portion of the computer program product (e.g., a downloadable app) may be at least temporarily stored or temporarily generated in a machine-readable storage medium such as a memory of a manufacturer server, a memory of an application store server, or a memory of a relay server.

Also, herein, the "unit" may include a hardware component such as a processor or a circuit and/or a software component executed by a hardware component such as a processor.

The foregoing descriptions of the present disclosure are merely examples, and those of ordinary skill in the art will readily understand that various modifications may be made therein without materially departing from the spirit or features of the present disclosure. Therefore, it is to be understood that the embodiments described above should be considered in a descriptive sense only and not for purposes of limitation. For example, each component described as a single type may also be implemented in a distributed manner, and likewise, components described as being distributed may also be implemented in a combined form.

The scope of the present disclosure is defined not by the above detailed description but by the following claims, and all modifications derived from the meaning and scope of the claims and equivalent concepts thereof should be construed as being included in the scope of the present disclosure.

**Claims**

1. A method of identifying, in an electronic device, a force touch with respect to a touch input of a user, the method comprising:

   receiving at least one sample input from the user;
   obtaining feature information for the at least one sample input;
   obtaining a plurality of force touch models for identifying the force touch;
   obtaining feature information for at least one touch input included in training data used to train the plurality of force touch models;
   determining a force touch model for identifying the force touch among the plurality of force touch models, based on a similarity between the feature information obtained with respect to the plurality of force touch models and the feature information for the sample input; and
   identifying, based on the determined force touch model, a force touch for the touch input of the user.

2. The method of claim 1, wherein the feature information of the at least one sample input and the feature information obtained with respect to the plurality of force touch models are obtained for each of a plurality of classes into which the force touch is classified.

3. The method of claim 1, wherein, when two or more force touch models are determined among the plurality of force touch models based on the similarity, a model for identifying the force touch is obtained based on the two or more force touch models, and the obtained model is one of an average model obtained based on an average value of weight values constituting the two or more force touch models or an ensemble model outputting output information determined based on information output from each of the two or more force touch models.

4. The method of claim 3, wherein the output information includes a probability value determined for each of a plurality of classes into which the force touch is classified, and

an evaluation result for the output information is determined based on a probability value for each class included in the output information.

5. The method of claim 3, wherein, based on a performance of the electronic device, one of the average model and the ensemble model is determined, and based on a result of the determination, the model for identifying the force touch is obtained.

6. The method of claim 1, wherein the determined force touch model includes

> a first force touch model outputting a result of identifying the force touch for the touch input based on information about the touch input of the user, and
> a second force touch model outputting a result of identifying the force touch for the touch input based on sensor information collected by the electronic device while the touch input of the user is received.

7. The method of claim 6, wherein, based on an accuracy of output information of the first force touch model and an accuracy of output information of the second force touch model, weight values respectively applied to the output information are determined, and based on a sum of the output information to which the determined weight values are respectively applied, the force touch for the touch input is identified.

8. An electronic device for identifying a force touch with respect to a touch input of a user, the electronic device comprising:

> a user input unit configured to receive at least one sample input from the user;
> a memory storing one or more instructions; and
> at least one processor configured to execute the one or more instructions stored in the memory, wherein the at least one processor is configured to
> obtain feature information for the at least one sample input,
> obtain a plurality of force touch models for identifying the force touch,
> obtain feature information for at least one touch input included in training data used to train the plurality of force touch models,
> determine a force touch model for identifying the force touch among the plurality of force touch models, based on a similarity between the feature information obtained with respect to the plurality of force touch models and the feature information for the sample input, and

identify, based on the determined force touch model, a force touch for the touch input of the user.

9. The electronic device of claim 8, wherein the feature information of the at least one sample input and the feature information obtained with respect to the plurality of force touch models are obtained for each of a plurality of classes into which the force touch is classified.

10. The electronic device of claim 8, wherein, when two or more force touch models are determined among the plurality of force touch models based on the similarity, a model for identifying the force touch is obtained based on the two or more force touch models, and

the obtained model is one of an average model obtained based on an average value of weight values constituting the two or more force touch models or an ensemble model outputting output information determined based on information output from each of the two or more force touch models.

11. The electronic device of claim 10, wherein the output information includes a probability value determined for each of a plurality of classes into which the force touch is classified, and

an evaluation result for the output information is determined based on a probability value for each class included in the output information.

12. The electronic device of claim 10, wherein, based on a performance of the electronic device, one of the average model and the ensemble model is determined, and based on a result of the determination, the model for identifying the force touch is obtained.

13. The electronic device of claim 8, wherein the determined force touch model includes

> a first force touch model outputting a result of identifying the force touch for the touch input based on information about the touch input of the user, and
> a second force touch model outputting a result of identifying the force touch for the touch input based on sensor information collected by the electronic device while the touch input of the user is received.

14. The electronic device of claim 13, wherein, based on an accuracy of output information of the first force touch model and an accuracy of output information of the second force touch model, weight values respectively applied to the output information are determined, and based on a sum of the output information to which the determined weight values are respectively applied, the force touch for the touch input is identified.

**15.** A computer program product comprising a computer-readable storage medium,
the computer-readable storage medium comprising instructions executed by an electronic device, the instructions comprising:

    receiving, by the electronic device, at least one sample input from a user;
    obtaining feature information for the at least one sample input;
    obtaining a plurality of force touch models for identifying a force touch;
    obtaining feature information for at least one touch input included in training data used to train the plurality of force touch models;
    determining a force touch model for identifying the force touch among the plurality of force touch models, based on a similarity between the feature information obtained with respect to the plurality of force touch models and the feature information for the sample input; and
    identifying, based on the determined force touch model, a force touch for a touch input of the user.

# FIG. 1

1000

SAMPLE INPUT FOR EACH CLASS → EXTRACT FEATURE INFORMATION (110) → FEATURE INFORMATION FOR EACH CLASS OF SAMPLE INPUT → COMPARE FEATURE INFORMATION (130) → DETERMINE FORCE TOUCH MODEL

TRAINING DATA FOR PLURALITY OF FORCE TOUCH MODELS → EXTRACT FEATURE INFORMATION (120) → FEATURE INFORMATION FOR EACH CLASS OF FORCE TOUCH MODEL

EP 4 266 160 A1

# FIG. 2

RECEIVE SAMPLE INPUT FOR CLASS A

RECEIVE SAMPLE INPUT FOR CLASS B

210

220

230

240

**FIG. 3**

# FIG. 4

# FIG. 5

FORCE TOUCH MODEL A

FORCE TOUCH MODEL B

510

# FIG. 6

610

FORCE TOUCH MODEL A

FORCE TOUCH MODEL B

⋮

FORCE TOUCH MODEL M

AVERAGE
MODEL

# FIG. 7

710

ENSEMBLE MODEL

INPUT →

FORCE TOUCH MODEL A →

FORCE TOUCH MODEL B →

⋮

FORCE TOUCH MODEL M →

711

SELECT OUTPUT → OUTPUT

# FIG. 8

1000

1100
USER INPUT UNIT

1300
PROCESSOR

1700
MEMORY

# FIG. 9

Block diagram 1000:

- **USER INPUT UNIT** — 1100
- **OUTPUT UNIT** — 1200
  - DISPLAY UNIT — 1210
  - AUDIO OUTPUT UNIT — 1220
  - VIBRATION MOTOR — 1230
- **SENSING UNIT** — 1400
  - GEOMAGNETIC SENSOR — 1410
  - ACCELERATION SENSOR — 1420
  - TEMPERATURE/HUMIDITY SENSOR — 1430
  - INFRARED SENSOR — 1440
  - GYROSCOPE SENSOR — 1450
  - POSITION SENSOR — 1460
  - BAROMETRIC PRESSURE SENSOR — 1470
  - PROXIMITY SENSOR — 1480
  - RGB SENSOR — 1490
- **PROCESSOR** — 1300
- **COMMUNICATOR** — 1500
  - SHORT-RANGE WIRELESS COMMUNICATION UNIT — 1510
    - Bluetooth
    - BLE
    - NFC/RFID
    - WLAN
    - ZIGBEE
    - Ant+
    - Wi-Fi Direct
    - UWB
  - MOBILE COMMUNICATION UNIT — 1520
  - BROADCAST RECEIVER — 1530
- **A/V INPUT UNIT** — 1600
  - CAMERA — 1610
  - MICROPHONE — 1620
- **MEMORY** — 1700
  - UI MODULE — 1710
  - TOUCHSCREEN MODULE — 1720
  - NOTIFICATION MODULE — 1730

EP 4 266 160 A1

# FIG. 10

RECEIVE SAMPLE INPUT —————1010

OBTAIN FEATURE INFORMATION FOR SAMPLE INPUT —————1020

OBTAIN FEATURE INFORMATION OF PLURALITY OF FORCE TOUCH MODELS —————1030

DETERMINE FORCE TOUCH MODEL FOR FORCE TOUCH IDENTIFICATION AMONG PLURALITY OF FORCE TOUCH MODELS BASED ON SIMILARITY BETWEEN FEATURE INFORMATION OF FORCE TOUCH MODEL AND FEATURE INFORMATION OF SAMPLE INPUT —————1040

IDENTIFY FORCE TOUCH FOR TOUCH INPUT OF USER BASED ON DETERMINED FORCE TOUCH MODEL —————1050

# FIG. 11

1110

1112

1111

BAROMETRIC
PRESSURE
SENSOR DATA

t

TIME

1120

BAROMETRIC
PRESSURE
SENSOR DATA

t

TIME

# FIG. 12

TOUCH INPUT 1211

FIRST FORCE TOUCH MODEL 1212

Class A Probability_Touch

Class B Probability_Touch

1008.6  1008.8  · · ·  1011.2  1221

BAROMETRIC PRESSURE INFORMATION 1222

SECOND FORCE TOUCH MODEL 1223

Class A Probability_Barometer

Class B Probability_Barometer

Class A Probability = Class A Probability_Touch * w1 + Class A Probability_Barometer * w2

Class B Probability = Class B Probability_Touch * w3 + Class B Probability_Barometer * w4

EP 4 266 160 A1

# FIG. 13

1060b  1060c  1011

TSP    TSP   CONNECTOR
FPCB   IC    (MALE)

1010a

TSP PANEL
1060a

(a)

+

1010b

MAIN PCB

BAROMETER — 1470
SENSOR
CONNECTOR
(FEMALE) — 1012

AP — 1080a
1080b

BATTERY

1091

1080aa
1080ab
1080ac

SUB PCB

1092

USB PORT
1020a

(b)

BEFORE ASSEMBLY

⇩

1060b  1060c  1011

TSP    TSP   CONNECTOR
FPCB   IC    (MALE)

MAIN
PCB

BAROMETER — 1470
SENSOR
CONNECTOR
(FEMALE) — 1012

AP — 1080a

TSP PANEL

1060a

BATTERY

1091

1080b

1080aa
1080ab
1080ac

SUB PCB

1092

USB PORT

(c)     1020a

AFTER ASSEMBLY

# FIG. 14

TOUCH INPUT

1060a

TSP PANEL

| TSP IC | 1060c | | 1080a | | 1470 |

AP

BAROMETER SENSOR

MAIN PCB

1080b

## INTERNATIONAL SEARCH REPORT

International application No.

**PCT/KR2021/017280**

### A. CLASSIFICATION OF SUBJECT MATTER

**G06F 3/041**(2006.01)i; **G06N 20/20**(2019.01)i; **G06N 7/00**(2006.01)i

According to International Patent Classification (IPC) or to both national classification and IPC

### B. FIELDS SEARCHED

Minimum documentation searched (classification system followed by classification symbols)

G06F 3/041(2006.01); G06F 17/00(2006.01); G06N 20/00(2019.01); G06N 99/00(2010.01); G10L 15/183(2013.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 샘플(sample), 특징(feature), 포스 터치(force touch), 모델(model), 학습(learning), 유사도(similarity), 클래스(class)

### C. DOCUMENTS CONSIDERED TO BE RELEVANT

| Category* | Citation of document, with indication, where appropriate, of the relevant passages | Relevant to claim No. |
|---|---|---|
| X | LIU, Yong et al. Ensemble Learning-Based Technique for Force Classifications in Piezoelectric Touch Panels. IEEE Sensors Journal. Volume 20, Issue 16, pp. 9540-9549, 13 April 2020. See pages 9542-9545; and figure 3. | 1-15 |
| A | KR 10-2020-0014510 A (SAMSUNG SDS CO., LTD.) 11 February 2020 (2020-02-11) See paragraphs [0053]-[0099]; claim 1; and figures 3-9. | 1-15 |
| A | KR 10-2019-0001434 A (SAMSUNG ELECTRONICS CO., LTD.) 04 January 2019 (2019-01-04) See paragraphs [0065]-[0163]; and figures 4a-6. | 1-15 |
| A | KR 10-1350782 B1 (POSTECH RESEARCH AND BUSINESS DEVELOPMENT FOUNDATION) 16 January 2014 (2014-01-16) See paragraphs [0025]-[0105]; and figures 1-6. | 1-15 |
| A | KR 10-2020-0142374 A (SAMSUNG ELECTRONICS CO., LTD.) 22 December 2020 (2020-12-22) See paragraphs [0050]-[0272]; claim 1; and figures 1a-19. | 1-15 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 February 2022** | **23 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/017280**

| Patent document<br>cited in search report | | | Publication date<br>(day/month/year) | Patent family member(s) | | | Publication date<br>(day/month/year) |
|---|---|---|---|---|---|---|---|
| KR | 10-2020-0014510 | A | 11 February 2020 | None | | | |
| KR | 10-2019-0001434 | A | 04 January 2019 | US | 10777193 | B2 | 15 September 2020 |
| | | | | US | 2018-0374476 | A1 | 27 December 2018 |
| KR | 10-1350782 | B1 | 16 January 2014 | CN | 104350491 | A | 11 February 2015 |
| | | | | EP | 2863319 | A1 | 22 April 2015 |
| | | | | KR | 10-2013-0139547 | A | 23 December 2013 |
| | | | | US | 2015-0161231 | A1 | 11 June 2015 |
| | | | | WO | 2013-187587 | A1 | 19 December 2013 |
| KR | 10-2020-0142374 | A | 22 December 2020 | EP | 3751469 | A1 | 16 December 2020 |
| | | | | US | 2020-0394451 | A1 | 17 December 2020 |
| | | | | WO | 2020-251283 | A1 | 17 December 2020 |

Form PCT/ISA/210 (patent family annex) (July 2019)